# EUROPÄISCHE PATENTANMELDUNG

(11) **EP 0 624 044 A2**
(43) Veröffentlichungstag der Anmeldung: **09.11.1994**
(21) Anmeldenummer: 94101592.7
(22) Anmeldetag: 03.02.1994
(51) Int. Cl.: H04Q 11/04

(54) **Digitales Zeitmultiplex-Vermittlungssystem**

(30) Priorität: 06.05.1993 DE 4315022
(71) Anmelder: ROBERT BOSCH GMBH, 70442 Stuttgart (DE)
(72) Erfinder: Bludau, Klaus, D-61440 Oberusel (DE); Eli, Bernhard, D-65428 Rüsselsheim (DE); Hetterich, Bernhard, D-60318 Frankfurt am Main (DE); Weingärtner, Günter, D-55257 Budenheim (DE)

(57) **Zusammenfassung**

Bei einer mehrstufigen Anordnung von Koppelfeldern in einem digitalen Zeitmultiplex-Vermittlungssystem soll nur eine einzige Leitungsverbindung zwischen den verschiedenen Modulen bzw. Koppelfeldern notwendig sein. Über diese Verbindungsleitung sollen sowohl alle zwischen den Modulen auszutauschenden Nutzdaten und die zur Steuerung erforderlichen vermittlungstechnischen Informationen übertragen werden können.

Von den in den Modulen angeordneten räumlich durchschaltenden Koppelfeldern sind Sammelschienen zu einem Zwischenadapter geführt, worin synchrone Hochgeschwindigkeits-Kanäle gebildet werden, über welche eine Verbindung zwischen verschiedenen Modulen auf gerichtet betriebenen, auch für die asynchrone Übertragung von vermittlungstechnischer Information in Form von Paketen vorgesehenen Verbindungsleitungen hergestellt wird. Diese Verbindungsleitungen sind zu einem Zentralmodul geführt, wo in den dort vorhandenen Zwischenadaptern die synchronen Kanäle von der asynchronen Information getrennt und in einem zentralen Koppelfeld durchgeschaltet werden.

Durch die einfache Verkabelung zwischen den miteinander zu verbindenden Anlagenteilen sind die Material- und Montagekosten beim Aufbauen von Vermittlungsanlagen äußerst gering. Es ergeben sich einheitliche Schnittstellen, und bei Erweiterungen sind keine Änderungen an bereits vorhandenen Teilen einer Vermittlungsanlage erforderlich.

## Beschreibung

Die Erfindung betrifft ein digitales Zeitmultiplex-Vermittlungssystem.

Aus der DE-AS 22 11 400 ist ein zweistufiges Zeitmultiplex-Vermittlungssystem bekannt. Dieses Vermittlungssystem besteht aus mehreren Koppelstufen, bei denen die Sammelschienen und Koppelpunkte matrixförmig angeordnet sind. Die Koppelpunkte befinden sich jeweils an den Kreuzungspunkten von Sende- und Empfangssammelschienen. Die jeweiligen Durchschalte-Zeitpunkte werden von einer Steuereinrichtung bestimmt, welche hierzu die in einem Verbindungsspeicher abgelegte Information benutzt. Es handelt sich dabei um ein Durchschalteverfahren für Amplitudenproben, die aus dem Sprachsignal entnommen werden. Diese Art einer Zeitmultiplex-Vermittlung ist unter dem Begriff Puls-Amplituden-Modulation PAM bekannt.

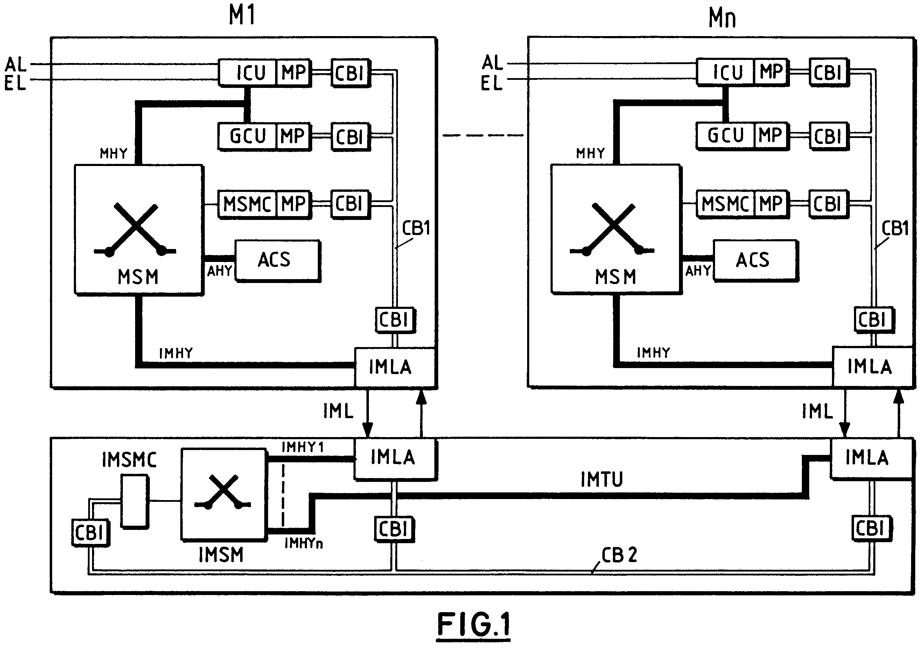

Aus den Figuren 1 bis 3 und der dazugehörigen Beschreibung ist zu entnehmen, daß von jeder 1. Koppelstufe A-KS mindestens ein Sammelschienenpaar zu einer 2. Koppelstufe B-KS geführt ist. Bei dieser Konfiguration gibt es zwei verschiedene Arten von Verbindungsdurchschaltung, wie dies in Spalte 6 von Zeile 7 bis 60 beschrieben ist. Dabei werden Verbindungen, die innerhalb einer 1. Koppelstufe A-KS verlaufen, in anderer Weise durchgeschaltet als Verbindungen zwischen zwei verschiedenen 1. Koppelstufen A-KS, welche über die 2. Koppelstufe B-KS verlaufen müssen.

Bei diesem zweistufigen Zeitmultiplex-Vermittlungssystem müssen nicht nur Sammelschienen-Verbindungen zwischen den Koppelstufen vorhanden sein, welche je nach Ausbau der Anlage mehrfach zu führen sind, sondern es ist außerdem noch ein Zustands- und Befehlskanal ZBK erforderlich, woran alle Koppelstufen mit ihren Steuereinrichtungen angeschlossen sein müssen. Der Austausch von Nutzdaten zwischen den verschiedenen Koppelstufen findet auf den Sammelschienen statt und unabhängig davon ist zusätzlich der Zustands- und Befehlskanal erforderlich. Dies bedeutet einen relativ hohen Aufwand an Verkabelung und den verschiedenen Schnittstellen.

Eine Schaltungsanordnung für Fernmeldevermittlungsanlagen, insbesondere PCM-Zeitmultiplex-Fernsprechvermittlungsanlagen mit Zentralkoppelfeld und angeschlossenen Teilkoppelfeldern ist aus der EP 0 363 631 A1 bekannt. Hierbei sind jeweils einer Anschlußgruppe zugeordnet Teilkoppelfelder vorgesehen, welche über Linkverbindungen mit einem zentralen Koppelfeld verbunden sind. Das zentrale Koppelfeld stellt Verbindungen zwischen den Teilkoppelfeldern her, wobei außer den Nachrichtenverbindungen auch Signalisierungsverbindungen hergestellt werden. Ein Signalisierungskanal ist jedoch innerhalb eines Pulsrahmens zeitlich aufgeteilt und jeweils für eine Mehrzahl von Nachrichtenkanälen gemeinsam zuständig. Dabei sind bestimmte Zeitabschnitte des Signalisierungskanals den einzelnen Nachrichtenkanälen fest zugeordnet. Dadurch besteht eine Abhängigkeit zwischen der Anzahl der Nachrichtenkanäle und der dafür notwendigen Signalisierungskanäle.

Die Aufgabe der Erfindung besteht darin, ein digitales Zeitmultiplex-Vermittlungssystem vorzustellen, welches bei einer Anordnung von Koppelfeldern in einheitlicher Form nur eine einzige Leitungsverbindung zwischen den veschiedenen Modulen bzw. Koppelfeldern benötigt. Über diese Verbindungsleitung sollen alle zwischen den Modulen auszutauschenden Nutzdaten und die zur Steuerung erforderlichen vermittlungstechnischen Informationen übertragen werden können, ohne daß eine feste zeitliche Zuordnung zu den Nutzdatenkanälen besteht.

Diese Aufgabe wird mit einer Merkmalskombination gelöst, wie sie im Patentanspruch 1 oder 3 angegeben ist.

Damit wird in vorteilhafter Weise erreicht, daß die Verkabelung zwischen den miteinander zu verbindenden Anlagenteilen äußerst einfach und preiswert ist, wodurch Material- und Montagekosten gering sind. Es sind einheitliche Schnittstellen vorgesehen, und bei Erweiterungen sind keine Änderungen an bereits vorhandenen Teilen einer Vermittlungsanlage erforderlich.

Ein Ausführungsbeispiel der Erfindung wird nachfolgend anhand von Zeichnungen näher erläutert.

Es zeight:
- Figur 1: das Blockschaltbild einer aus mehreren Modulen bestehenden digitalen Vermittlungsanlage
- Figur 2: das Schema eines Koppelfeldes
- Figur 3: die direkte Zusammenschaltung zweier Module

In der Figur 1 ist schematisch dargestellt, wie mehrere Vermittungsmodule M1 bis Mn über seriell betriebene Verbindungsleitungen IML mit einem Zentralmodul IMTU verbunden sind. Jeder einzelne Vermittlungsmodul M1 bis Mn ist für sich allein funktionsfähig und enthält die dazu notwendigen verschiedenartigen Baugruppen. Für den Betrieb von zu Endgeräten führenden Anschlußleitungen AL und Externleitungen EL sind Schnittstelleneinheiten ICU vorgesehen. Auf jeder Schnittstelleneinheit ICU sind vorzugsweise die Schnittstellen für mehrere gleichartige Anschlußleitungen AL oder Externleitungen EL angeordnet. Je nach Ausbaugröße einer Vermittlungsanlage kann ein Modul, z. B. M1, mit mehreren Schnittstelleneinheiten ICU bestückt sein. Jede Schnittstelleneinheit ICU enthält eine Steuereinrichtung MP, in welcher die Programme zur Steuerung der jeweiligen Anschlußperipherie abgespeichert sind. Jede Steuereinrichtung MP hat über eine Busschnittstelle CBI Zugang zu einem Parallelbus CB1, über den vermittlungstechnische Daten, welche in Form von Paketen versendet werden, zu allen daran angeschlossenen Busschnittstellen CBI übertragen werden können. Außerdem enthält ein Modul M1 eine gemeinsame Steuerung, welche die vermittlungstechnischen Prozeduren für alle Schnittstelleneinheiten ICU mit Hilfe ihrer Steuereinrichtung MP ausführt. Die Steuereinrichtung MP der gemeinsamen Steuerung GCU ist ebenso wie alle anderen Steuereinrichtungen MP über eine Busschnittstelle CBI mit dem Parallelbus CB1 verbunden. Über diesen Parallelbus CB1 kann die gemeinsame Steuerung GCU Datenpakete mit vermittlungstechnischer Information zu allen Schnittstelleneinheiten ICU senden und auch von dort empfangen sowie Befehle an die Koppelfeldsteuerung MSMC geben.

Die Koppelfeldsteuerung MSMC ist mit ihrer Steuereinrichtung MP ebenfalls über eine Busschnittstelle CBI mit dem Parallelbus CB1 verbunden. Die von dort empfangenen Vermittlungsaufträge werden innerhalb der Koppelfeldsteuerung MSMC zu Befehlen verarbeitet, die zum Ansteuern von Koppelpunkten KP im Koppelfeld MSM dienen.

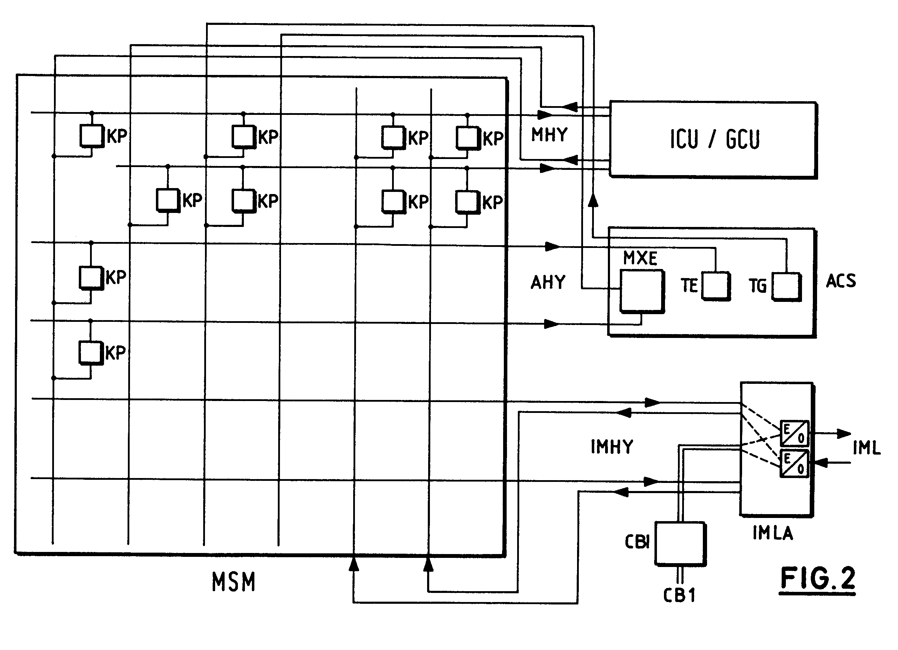

Das Koppelfeld MSM ist, wie aus Figur 2 ersichtlich ist, matrixförmig aufgebaut, wobei Koppelpunkte KP an den jeweiligen Kreuzungspunkten zwischen Empfangssammelschienen und Sendesammelschienen angeordnet sind.

Mehrere Sende- und Empfangssammelschienen MHY sind in Form von sogenannten Highways zu allen Schnittstelleneinheiten ICU und auch zur gemeinsamen Steuerung GCU geführt. Außerdem sind Hilfssammelschienen AHY zu einer Hilfseinheit ACS geführt. In dieser Hilfseinheit ACS befinden sich im wesentlichen gemeinsame Einrichtungen für das Senden und Empfangen von Tonfrequenzen wie dies später noch anhand der Figur 2 erläutert wird. Weitere Sammelschienen IMHY sind vom Koppelfeld MSM aus zu einem Zwischenadapter IMLA geführt, welcher für den Austausch von Nutzdaten und vermittlungstechnischer Information zwischen verschiedenen Modulen M1 bis Mn vorgesehen ist.

Der Zwischenadapter IMLA ist über eine Verbindungsleitung IML mit einem Zentralmodul IMTU verbunden. Auf dieser Verbindungsleitung IML findet ein Datenverkehr mit hoher Geschwindigkeit statt, wobei Nutzdaten und vermittlungstechnische Information übertragen werden. Für die auf den weiteren Sammelschienen IMHY befindlichen Nutzdaten, wobei insbesondere digitalisierte Sprache vermittelt wird, werden im Zwischenadapter IMLA synchrone Kanäle gebildet. Die auf dem Parallelbus CB1 über die Busschnittstelle CBI ankommenden und abgehenden Datenpakete werden asynchron über die Verbindungsleitung IML übertragen. Dabei werden in den Zwischenadaptern IMLA für die synchron zu vermittelnden Kanäle und für die asynchron übertragenen Datenpakete jeweils feste Zeiträume vorgegeben.

Der Zwischenadapter IMLA eines jeden Moduls M1 bis Mn ist jeweils über eine Verbindungsleitung IML mit einem gleichartigen Zwischenadapter IMLA im Zentralmodul IMTU verbunden. Die Zwischenadapter IMLA können dabei jeweils mit optischen Sendern und Empfängern zum Anschluß von Lichtwellenleitern ausgestattet sein. In den Zwischenadaptern IMLA werden jeweils die ankommenden Informationen so aufgeteilt, daß die synchronen Kanäle auf die Sammelschienen IMHY gelangen und die asynchronen Datenpakete über die Busschnittstelle CBI an den Parallelbus CB1 oder CB2 im Zentralmodul IMTU ausgegeben werden. Auf diese Weise gelangen asynchron ankommende Datenpakete, welche Steuerinformationen für die Einstellung eines im Zentralmodul IMTU befindlichen zentralen Koppelfeldes IMSM enthalten, über den 2. Parallelbus CB2 und die jeweiligen Busschnittstellen CBI zur zentralen Koppelfeldsteuerung IMSMC. Das zentrale Koppelfeld IMSM ist ebenso matrixförmig aufgebaut, wie die in den Modulen M1 bis Mn befindlichen Koppelfelder MSM. Vom zentralen Koppelfeld IMSM führen jeweils Bündel von mehreren Sende- und Empfangssammelschienen IMHY1 bis IMHYn zu den jeweiligen Zwischenadaptern IMLA, welche den einzelnen Modulen M1 bis Mn zugeordnet sind. Dort wird die auf den Sammelschienen IMHY befindliche Information auf synchrone Kanälen aufgeteilt und auf den Verbindungsleitungen zu den Modulen M1 bis Mn übertragen. Sie gelangen dann über die dort befindlichen weiteren Sammelschienen IMHY in das jeweilige Koppelfeld MSM. Entsprechend der dort herrschenden Verbindungssituation ist dann die Weitervermittlung zu den Schnittstelleneinheiten ICU oder zu den gemeinsamen Steuereinrichtungen GCU gegeben.

In der Figur 2 ist mehr im Detail dargestellt, wie die Sende- und Empfangssammelschienen als sogenannte Highways MHY, AHY und IMHY innerhalb eines Moduls M1 bis Mn geführt sind. Die Sende- und Empfangssammelschienen MHY für die Schnittstelleneinheiten ICU und die gemeinsame Steuerung GCU sind in ihrer Anzahl so bemessen, daß der Anzahl von Schnittstelleneinheiten ICU entsprechend eine ausreichende Verkehrsleistung beim Vermitteln von Nutzdaten vorhanden ist. Das gleiche gilt für die Hilfssammelschienen AHY, welche mit der Hilfseinheit ACS verbunden sind. In dieser Hilfseinheit ACS befinden sich Tonempfänger TE für das Empfangen von Hörtönen und Tonwahlsignalen, Tongeneratoren TG für das Senden von Hörtönen und ggf. Ansageeinrichtungen AE für das Senden von digital abgespeicherten Sprachansagen. Außerdem ist in der Hilfseinheit ACS mindestens eine Konferenzeinrichtung MXE vorgesehen, worin die digitalisierten Sprachproben der an einer Konferenz beteiligten Anschlüsse nach einem bekannten Verfahren so gemischt werden, daß die für eine Konferenzverbindung erforderliche Übertragungssituation gegeben ist. Ein weiteres Bündel von Sende- und Empfangssammelschienen IMHY ist, wie bereits beschrieben worden ist, zu dem einem Modul M1 bis Mn zugeordneten Zwischenadapter IMLA geführt. Die Anzahl dieser weiteren Sende- und Empfangssammelschienen IMHY ist so bemessen, daß eine ausreichende Verkehrskapazität für die zwischen verschiedenen Modulen M1 bis Mn durchzuschaltenden Verbindungen besteht. Innerhalb des Koppelfeldes MSM sind in hochintegrierten Schaltkreisen enthaltene Koppelpunkte KP vorgesehen, die so angeordnet sind, daß jede Sendesammelschiene mit jeder Empfangssammelschiene gekoppelt werden kann. Es ist also innerhalb eines Koppelfeldes MSM eine vollkommene Erreichbarkeit gegeben, so daß sowohl Internverbindungen innerhalb eines Moduls, z. B. M1, als auch Verbindungen mit einem anderen Modul, z. B. Mn, möglich sind. Die Kapazität eines Koppelfeldes MSM ist dabei so bemessen, daß der von einem Modul M1 bis Mn erzeugte Verkehr bewältigt werden kann. Sollte diese vorgegebene Verkehrsleistung in Extremfällen nicht ausreichen, so kann ohne weiteres ein voll bestückter Modul aufgeteilt werden, so daß die dann vorhandene zusätzliche Kapazität mit Sicherheit ausreichend ist.

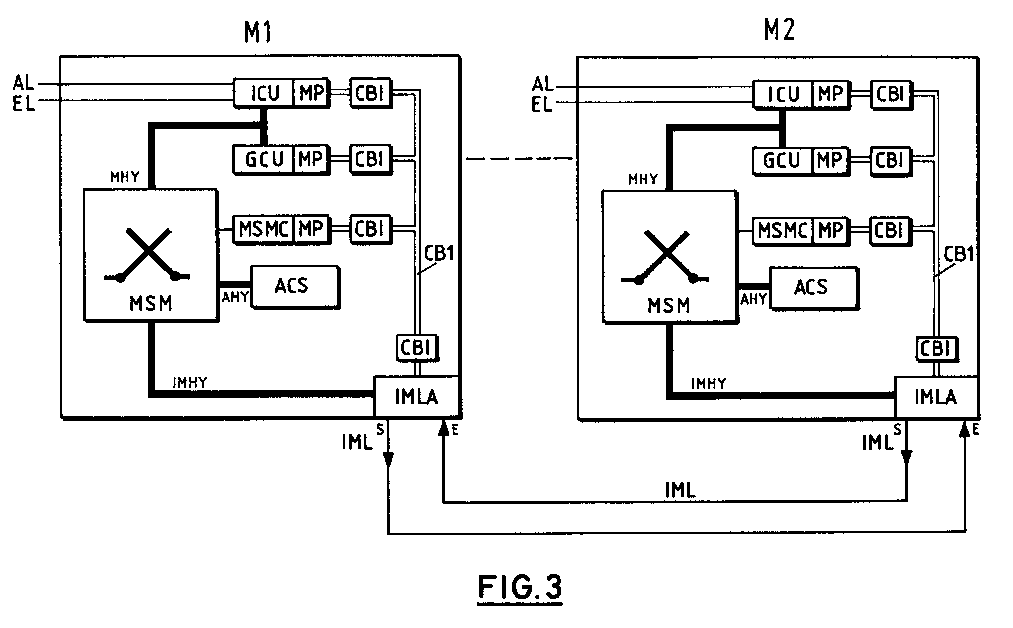

In der Figur 3 ist dargestellt, wie verfahren werden kann, wenn eine Vermittlungsanlage aus lediglich zwei Modulen M1 und M2 besteht, oder wenn eine aus einem Modul M1 bestehende Vermittlungsanlage durch einen weiteren Modul M2 erweitert wird. In diesem Fall ist kein Zentralmodul IMTU notwendig, sondern es werden die jeweiligen Zwischenadapter IMLA über eine einzige Verbindungsleitung IML direkt miteinander verbunden. Dabei wird die Sendeseite S des einen Moduls M1 oder M2 jeweils an die Empfangsseite E des anderen Moduls M2 oder M1 angeschlossen. Der auf der Verbindungsleitung IML stattfindende Vermittlungsverkehr in Gestalt von synchronen Kanälen und asynchron vermittelten Datenpaketen unterscheidet sich bei einer derartigen Direktverbindung in keiner Weise von dem Betrieb mit einem Zentralmodul IMTU. Auch bei dieser Betriebsart ist es selbstverständlich möglich, die Zwischenadapter IMLA mit optischen Sendern und Empfängern zum Anschluß von Lichtwellenleitern auszustatten.

## Patentansprüche

1. Digitales Zeitmultiplex-Vermittlungssystem mit mehr als zwei räumlich durchschaltenden Koppelfeldern (MSM), welche aus matrixförmig angeordneten Empfangs- und Sendesammelschienen bestehen, die über steuerbare Koppelpunkte miteinander kanalweise verbindbar sind, wobei jedes räumlich im Zeitmultiplex durchschaltende Koppelfeld (MSM) in jeweils einem zugehörigen Vermittlungsmodul (M1 bis Mn) angeordnet ist, wobei jedes Koppelfeld (MSM) durch eine diesem zugeordnete Koppelfeldsteuerung (MSMC) eingestellt wird, die ihre Einstellinformation in Form eines über einen Parallelbus (CB1) empfangenen Paketes erhält und daraufhin eine digitale Verbindung zwischen einer Sendesammelschiene und einer Empfangssammelschiene herstellt, wobei eine vollkommene Erreichbarkeit gegeben ist,
wobei Sendesammelschienen und Empfangssammelschienen (MHY) von den modulinternen Koppelfeldern (MSM) zu allen innerhalb des gleichen Vermittlungsmoduls (M1 bis Mn) befindlichen Schnittstelleneinheiten (ICU) und gemeinsamen Steuerungen (GCU) geführt sind,
wobei Hilfssammelschienen (AHY) vorgesehen sind, über die Verbindungen zu Tonsendern und -empfängern hergestellt werden, welche in einer gemeinsamen Hilfseinheit (ACS) zusammengefaßt sind,
wobei weitere Sammelschienen (IMHY) für Verbindungen zu anderen Vermittlungsmodulen (M1 bis Mn) vorhanden sind, welche mit einem Zwischenadapter (IMLA) verbunden sind, worin synchrone Hochgeschwindigkeits-Kanäle gebildet werden, über welche eine Verbindung auf gerichtet betriebenen, auch für die asynchrone Übertragung von vermittlungstechnischer Information vorgesehenen Verbindungsleitungen (IML) hergestellt wird,
und wobei diese seriell betriebenen Verbindungsleitungen (IML) zu einem Zentralmodul (IMTU) geführt sind, wo in den dort vorhandenen Zwischenadaptern (IMLA) die synchrone Information von der asynchronen Information getrennt und in einem zentralen Koppelfeld (IMSM) durchgeschaltet wird.

2. Vermittlungssystem nach Anspruch 1,
**dadurch gekennzeichnet,**
daß die Einstellbefehle für die im Zentralmodul (IMTU) befindliche Koppelfeldsteuerung (IMSMC) für das zentrale Koppelfeld (IMSM) von mindestens einer der an einer Verbindung beteiligten gemeinsamen Steuerung (GCU) eines Moduls (M1 bis Mn) abgegeben und über die Parallelbusse (CB1, CB2) sowie über die seriellen Verbindungsleitungen (IML) dorthin gelangen.

3. Digitales Zeitmultiplex-Vermittlungssystem mit zwei räumlich durchschaltenden Koppelfeldern (MSM), welche aus matrixförmig angeordneten Empfangs- und Sendesammelschienen bestehen, die über steuerbare Koppelpunkte miteinander kanalweise verbindbar sind,
wobei jedes der beiden räumlich im Zeitmultiplex durchschaltenden Koppelfelder (MSM) in jeweils einem zugehörigen Vermittlungsmodul (M1, M2) angeordnet ist, wobei jedes Koppelfeld (MSM) durch eine diesem zugeordnete Koppelfeldsteuerung (MSMC) eingestellt wird, die ihre Einstellinformation in Form eines über einen Parallelbus (CB1) empfangenen Paketes erhält und daraufhin eine digitale Verbindung zwischen einer Sendesammelschiene und einer Empfangssammelschiene herstellt, wobei eine vollkommene Erreichbarkeit gegeben ist,
wobei Sendesammelschienen und Empfangssammelschienen (MHY) von den modulinternen Koppelfeldern (MSM) zu allen innerhalb des gleichen Vermittlungsmoduls (M1 bis Mn) befindlichen Schnittstelleneinheiten (ICU) und gemeinsamen Steuerungen (GCU) geführt sind,
wobei Hilfssammelschienen (AHY) vorgesehen sind, über die Verbindungen zu Tonsendern und -empfängern hergestellt werden, welche in einer gemeinsamen Hilfseinheit (ACS) zusammengefaßt sind,
wobei weitere Sammelschienen (IMHY) für eine Verbindung zu dem anderen Vermittlungsmodul (M1 oder M2) vorhanden sind, welche mit einem Zwischenadapter (IMLA) verbunden sind, worin synchrone Hochgeschwindigkeits-Kanäle gebildet werden, über welche eine Verbindung auf einer gerichtet betriebenen, auch für die asynchrone Übertragung von vermittlungstechnischer Information vorgesehenen Verbindungsleitung (IML) hergestellt wird,
und wobei diese seriell betriebene Verbindungsleitung (IML) die beiden Vermittlungsmodule (M1, und M2) direkt miteinander verbindet, indem die Sendeseite (S) des einen Vermittlungsmoduls (M1 oder M2) mit der Empfangsseite (E) des anderen Vermittlungsmoduls (M2 oder M1) zusammengeschaltet ist.

4. Vermittlungssystem nach den Ansprüchen 1 oder 3,
**dadurch gekennzeichnet,**
daß in der gemeinsamen Hilfseinheit (ACS) eine Aufteilung der dafür vorgesehenen Hilfs-Sammelschienen (AHY) derart erfolgt,
daß Empfangssammelschienen nur an Hörton- und Tonwahlempfänger (TE) angeschlossen sind und die zugehörigen Sendesammelschienen mit Tongeneratoren (TG) und/oder Sprachansageeinrichtungen (SPE) verbunden sind.

5. Vermittlungssystem nach den Ansprüchen 1 oder 3,
**dadurch gekennzeichnet,**
daß die Zwischenadapter (IMLA) mit optischen Sendern und Empfängern (E/O) zum Anschluß von Lichtwellenleitern ausgestattet sind.
